# EUROPEAN PATENT SPECIFICATION

(11) **EP 3 275 575 B1**
(45) Date of publication and mention of the grant of the patent: **09.08.2023**
(21) Application number: 17178666.8
(22) Date of filing: 29.06.2017
(51) Int. Cl.: B33Y 30/00, B33Y 10/00, B29C 64/112, B29C 64/245, B22F 10/16, B22F 12/33, B22F 12/37, B22F 12/55, B22F 10/43, B22F 12/53

(54) **THREE-DIMENSIONAL SHAPED ARTICLE PRODUCTION APPARATUS COMPRISING A THREE-DIMENSIONAL SHAPED ARTICLE SHAPING STAGE, AND THREE-DIMENSIONAL SHAPED ARTICLE PRODUCTION METHOD**
VORRICHTUNG ZUR HERSTELLUNG DREIDIMENSIONALGEFORMTER ARTIKEL MIT EINER BÜHNE FÜR DREIDIMENSIONALE ARTIKEL UND VERFAHREN ZUR HERSTELLUNG DREIDIMENSIONALER GEFORMTER ARTIKEL
APPAREIL DE PRODUCTION D'ARTICLES TRIDIMENSIONNELS COMPRENANT UNE PLATEFORME POUR ARTICLES TRIDIMENSIONNELS ET PROCÉDÉ DE PRODUCTION D'ARTICLES TRIDIMENSIONNELS

(30) Priority: 26.07.2016 JP 2016146555; 06.03.2017 JP 2017041966
(43) Date of publication of application: 31.01.2018
(73) Proprietor: Seiko Epson Corporation, Tokyo 160-8801 (JP)
(72) Inventor: OKAMOTO, Eiji, Suwa-shi, Nagano 392-8502 (JP); TSUNOYA, Akihiko, Suwa-shi, Nagano 392-8502 (JP); ISHIDA, Masaya, Suwa-shi, Nagano 392-8502 (JP)
(74) Representative: Miller Sturt Kenyon

(56) References cited:
- WO-A1-2014/039378
- WO-A1-2014/049159
- WO-A1-2016/077250
- CN-A- 104 827 665
- DE-A1-102012 106 141

## Description

### BACKGROUND

### 1. Technical Field

The present invention relates to a three-dimensional shaped article production apparatus comprising a three-dimensional shaped article shaping stage and a three-dimensional shaped article production method.

### 2. Related Art

Heretofore, there have been used a production apparatus for producing a three-dimensional shaped article by stacking layers. In such a three-dimensional shaped article production apparatus, a stacked body of a three-dimensional shaped article is formed on a shaping stage.

For example, JP-A-2010-100883 (Patent Document 1) discloses a production method for producing a three-dimensional shaped article using a three-dimensional shaped article production apparatus capable of forming a stacked body of a three-dimensional shaped article on a shaping plate (shaping stage).

Degreasing or sintering of a stacked body of a three-dimensional shaped article formed on a shaping stage is generally performed. When a stacked body of a three-dimensional shaped article is degreased or sintered, a material (a material to be removed) other than a constituent material of the final three-dimensional shaped article is decomposed and removed by volatilization or the like, and therefore, the stacked body of the three-dimensional shaped article is shrunk. However, when the stacked body of the three-dimensional shaped article is degreased or sintered, a manner of volatilization of the material to be removed from the shaping stage side and a manner of volatilization of the material to be removed from on the shaping stage differ from each other, and therefore, there occurs a difference in the shrinkage ratio, and thus, the stacked body is deformed accompanying degreasing or sintering in some cases. Patent Document 1 describes that as the material of the shaping stage, a material having a low bonding property to the three-dimensional shaped article is desired, but has no description on deformation of the stacked body due to a difference between a manner of volatilization of the material to be removed from the shaping stage side and a manner of volatilization of the material to be removed from on the shaping stage. That is, Patent Document 1 does not disclose a technique capable of suppressing deformation of the stacked body accompanying degreasing or sintering.
Patent Document 2 (WO 2014/039378 A1) discloses a three-dimensional printing system and equipment assembly for the manufacture of three-dimensionally printed articles is provided. The equipment assembly includes a three-dimensional printing build system, an optional liquid removal system and an optional harvester system. The build system includes a conveyor, plural build modules and at least one build station having a powder-layering system and a printing system. The equipment assembly can be used to manufacture pharmaceutical, medical, and non- pharmaceutical / non-medical objects. It can be used to prepare single or multiple articles.
Patent Document 3 (CN 10,4827,665 A) discusses providing a printing workbench applied to a three-dimensional printer. The printing workbench successively comprises a heating layer, a glass layer and a film layer. The film layer is formed by 12 parts of heterocyclic acrylic resin by mass and 24-28 parts of weak solvent resin by mass. After the printing process, the heating layer stops heating, and the temperature of the film layer is cooled gradually to the room temperature. At this time, the adhesion force between the contact surfaces of the film layer with a to-be-printed object is lowered to a minimum value. Therefore, a user can easily and conveniently take out the to-be-printed object, while the integrity of the film layer is not damaged at all. Therefore, the service life of the film layer is prolonged. The film layer can be applied to three-dimensional printing materials, such as ABS, PA, PC and the like, and is high in universality.
Patent Document 4 (WO 2016/077250 A1) discloses systems, apparatuses, and methods for generating a three- dimensional (3D) object using an energy beam array. Patent Document 4 also discloses systems, apparatuses and methods for generating a 3D object with small-scaffold features, as well as systems, apparatuses and methods for generating a 3D object using roll-to-roll. The roll-to- roll apparatus may include a moving platform of the 3D object. The 3D object can be formed by an additive manufacturing process from a material such as powder.
Patent Document 5 (WO 2014/049159 A1) discusses providing a device and a method for stabilizing a powder bed by means of vacuum for an additive manufacturing method, wherein the device comprises a container open at least on one side, comprising a bottom, at least one side wall, and a container opening; a filter in or above the bottom and/or in the at least one side wall, wherein an area occupied by the filter corresponds to the area of the bottom or of the side wall and wherein the filter is substantially impermeable to a powder forming the powder bed; and a connection on the bottom and/or on the side wall of the container or on a side of the filter facing away from the container opening, wherein the connection is adapted in order that the connection can be connected to a suction pump, such that a powder bed arranged in the container is pressed against the filter and stabilized by means of a vacuum produced by the suction pump.
Patent Document 6 (DE 10 2012 106141 A1) discloses a process for unpacking a component produced by means of a generative manufacturing process from a particulate material bulk of loose, nonconsolidated particulate material, which is arranged together with component in a design space and surrounds component. To unpack component, the particulate material bed surrounding component is transferred to a fluidized bed so that the loose, unconsolidated particulate material is fluidized, and the fluidized, unconsolidated particulate material is discharged downwards from installation space 5. A device for use in the process is also described.

### SUMMARY

An advantage of some aspects of the invention is to suppress deformation of a stacked body of a three-dimensional shaped article formed by stacking layers on a shaping stage accompanying degreasing or sintering of the stacked body.

A first aspect of the invention is directed to a three-dimensional shaped article production apparatus for producing a three-dimensional shaped article by stacking layers to form the stacked body, the three-dimensional shaped article production apparatus comprising: a three-dimensional shaped article shaping stage, wherein the shaping stage has a forming surface on which the stacked body is to be formed, and the shaping stage is formed into a porous structure using a high-melting point material having a higher melting point than a constituent material of the three-dimensional shaped article, the shaping stage is configured to be attachable and detachable from the shaped article production apparatus, and suitable for placement in a thermostatic bath; and pores of the porous structure are formed, and the pores formed on the forming surface have an average pore diameter of 1 µm or more and 5 µm or less, and wherein the high-melting point material contains at least one of alumina, silicon carbide, and zirconia.

The shaping stage according to this aspect of the invention is formed into a porous structure. Therefore, when the stacked body of the three-dimensional shaped article formed by stacking layers on the shaping stage is degreased or sintered, the difference between a manner of volatilization of a material to be removed from the shaping stage side (downward direction) and a manner of volatilization of the material to be removed from the shaping side (upward direction and lateral direction) (that is, the difference in the shrinkage ratio) can be decreased. Accordingly, it is possible to suppress deformation of the stacked body of the three-dimensional shaped article formed by stacking layers on the shaping stage accompanying degreasing or sintering of the stacked body. Further, by configuring the shaping stage to be attachable to and detachable from the three-dimensional shaped article production apparatus, when the stacked body of the three-dimensional shaped article is transferred to a device for performing degreasing or sintering, the stacked body can be transferred along with the shaping stage, and therefore, breakage of the stacked body can be suppressed.

The stacked body of the three-dimensional shaped article is shrunk accompanying degreasing or sintering. When large pores are formed on the forming surface on which the stacked body of the three-dimensional shaped article is to be formed, the stacked body of the three-dimensional shaped article is shrunk while confining the constituent material of the three-dimensional shaped article in the pores during degreasing or sintering. Due to this, the stacked body of the three-dimensional shaped article may be deformed or the like accompanying degreasing or sintering. However, according to this configuration, pores of the porous structure are formed, and the pores formed on the forming surface have an average pore diameter of 1 µm or more and 5 µm or less, and therefore, it is possible to suppress shrinkage of the stacked body of the three-dimensional shaped article while inserting the constituent material of the three-dimensional shaped article into the pores and confining the constituent material therein during degreasing or sintering. Accordingly, deformation or the like of the stacked body of the three-dimensional shaped article accompanying degreasing or sintering can be suppressed.

Accordingly, the high-melting point material contains at least one of alumina, silicon carbide, and zirconia. These materials have a high melting point and are hardly deformed even at a high temperature, and therefore, it is possible to particularly effectively suppress deformation of the stacked body of the three-dimensional shaped article formed on the shaping stage accompanying degreasing or sintering of the stacked body.

A second preferable aspect of the invention is directed to a three-dimensional shaped article shaping stage, which is used in a three-dimensional shaped article production apparatus for producing a three-dimensional shaped article by stacking layers to form a stacked body, has a forming surface on which the stacked body is to be formed, and is formed into a porous structure so as to communicate from the forming surface side to a different side from the forming surface side using a high-melting point material having a higher melting point than a constituent material of the three-dimensional shaped article.

The shaping stage according to this aspect of the invention is formed into a porous structure so as to communicate from the forming surface side to a different side from the forming surface side. Therefore, when the stacked body of the three-dimensional shaped article formed by stacking layers on the shaping stage is degreased or sintered, the difference between a manner of volatilization of a material to be removed from the shaping stage side (downward direction) and a manner of volatilization of the material to be removed from on the shaping stage (upward direction and lateral direction) (that is, the difference in the shrinkage ratio) can be decreased. Accordingly, it is possible to effectively suppress deformation of the stacked body of the three-dimensional shaped article formed by stacking layers on the shaping stage accompanying degreasing or sintering of the stacked body.

A third preferable aspect of the invention is directed to the three-dimensional shaped article shaping stage according to the first or second aspect of the invention, wherein an organic film having a lower melting point than the constituent material is formed on the forming surface.

The shaping stage according to this aspect of the invention has an organic film having a lower melting point than the constituent material of the three-dimensional shaped article is formed on the forming surface on which the stacked body is to be formed. Therefore, for example, the organic film can be removed along with the material to be removed accompanying degreasing or sintering of the stacked body of the three-dimensional shaped article at a temperature which is lower than the melting point of the constituent material of the three-dimensional shaped article and higher than the melting point of the organic film, and thus, deformation of the stacked body can be particularly effectively suppressed, and also the stacked body can be easily separated from the shaping stage. Further, by configuring the shaping stage to be attachable to and detachable from the three-dimensional shaped article production apparatus, when the stacked body of the three-dimensional shaped article is transferred to a device for performing degreasing or sintering, the stacked body can be transferred along with the shaping stage, and therefore, breakage of the stacked body can be suppressed.

The "organic film having a lower melting point than the constituent material" refers to a film which covers at least a part of the forming surface and may contain an organic component having a lower melting point than the constituent material.

A fourth preferable aspect of the invention is directed to the three-dimensional shaped article shaping stage according to the third aspect of the invention, in which the organic film contains a component having a higher melting point than the constituent material.

According to this aspect of the invention, the organic film contains a component having a higher melting point than the constituent material of the three-dimensional shaped article. Therefore, when the stacked body of the three-dimensional shaped article formed on the shaping stage is degreased or sintered, the component having a high melting point remains on the shaping stage as a release material after degreasing or sintering, and the stacked body can be particularly easily separated from the shaping stage.

A fifth preferable aspect of the invention is directed to the three-dimensional shaped article shaping stage according to the third or fourth aspect of the invention, in which the organic film contains an acrylic resin.

According to this aspect of the invention, the organic film contains an acrylic resin. The acrylic resin has a low melting point, and carbon derived from the acrylic resin hardly remains on the shaping stage after degreasing or sintering, and therefore, mixing of carbon as an impurity in the stacked body of the three-dimensional shaped article after degreasing or sintering can be suppressed.

A sixth aspect of the invention is directed to a three-dimensional shaped article production apparatus for producing a three-dimensional shaped article by forming a stacked body on the forming surface of the shaping stage according to any one of the first to fifth aspects of the invention; and applying energy to the stacked body.

According to this aspect of the invention, when the stacked body of the three-dimensional shaped article formed by stacking layers on the shaping stage is degreased or sintered, the difference between a manner of volatilization of a material to be removed from the shaping stage side and a manner of volatilization of the material to be removed from on the shaping stage can be decreased. Therefore, it is possible to suppress deformation of the stacked body of the three-dimensional shaped article formed by stacking layers on the shaping stage accompanying degreasing or sintering of the stacked body.

According to this aspect of the invention, when the stacked body of the three-dimensional shaped article formed by stacking layers on the shaping stage in the forming of the stacked body is degreased or sintered in the applying of the energy, the difference between a manner of volatilization of a material to be removed from the shaping stage side and a manner of volatilization of the material to be removed from the shaping side can be decreased. Therefore, it is possible to suppress deformation of the stacked body of the three-dimensional shaped article formed by stacking layers on the shaping stage accompanying degreasing or sintering of the stacked body.

A seventh preferable aspect of the invention is directed to the three-dimensional shaped article production method according to the sixth aspect of the invention, in which sintering or melting a constituent material is performed after the applying of the energy.

According to this aspect of the invention, sintering or melting the constituent material is performed after the applying of the energy. Therefore, the stacked body of the three-dimensional shaped article degreased in the applying of the energy can be sintered or melted.

### BRIEF DESCRIPTION OF THE DRAWINGS

Embodiments of the invention will now be described by way of example only with reference to the accompanying drawings, wherein like numbers reference like elements.
FIG. 1A is a schematic configuration view showing a configuration of a three-dimensional shaped article production apparatus according to an embodiment of the invention, and FIG. 1B is an enlarged view of a portion C shown in FIG. 1A.
FIG. 2A is a schematic configuration view showing a configuration of a three-dimensional shaped article production apparatus according to an embodiment of the invention, and FIG. 2B is an enlarged view of a portion C' shown in FIG. 2A.
FIG. 3 is a schematic perspective view of a head base according to an embodiment of the invention.

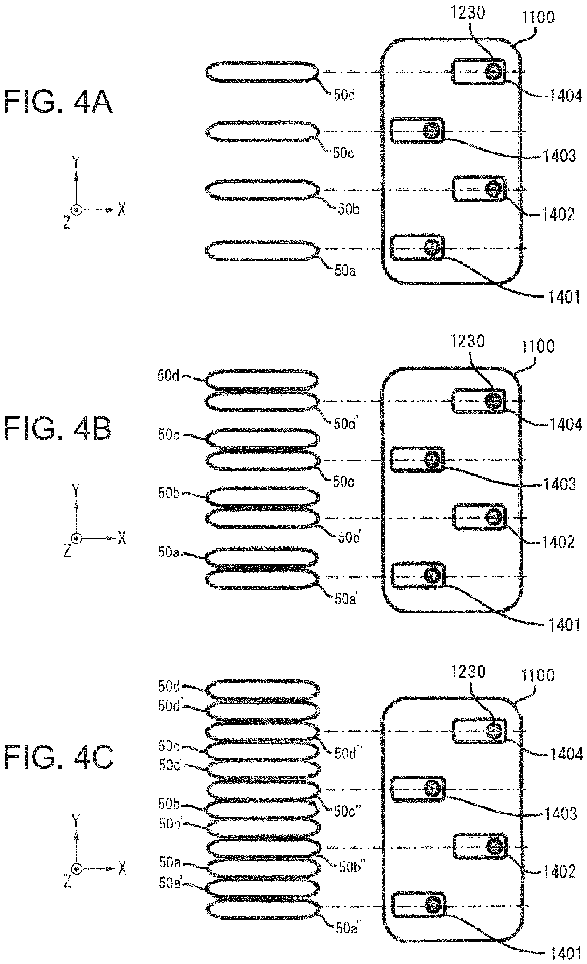

FIG. 4A is a plan view conceptually illustrating the relationship between the arrangement of head units and the forming form of a three-dimensional shaped article according to an embodiment of the invention; FIG. 4B is a plan view conceptually illustrating the relationship between the arrangement of head units and the forming form of a three-dimensional shaped article according to an embodiment of the invention; and FIG. 4C is a plan view conceptually illustrating the relationship between the arrangement of head units and the forming form of a three-dimensional shaped article according to an embodiment of the invention.
FIG. 5A is a schematic view conceptually illustrating the forming form of a three-dimensional shaped article; and FIG. 5B is a schematic view conceptually illustrating the forming form of a three-dimensional shaped article.
FIG. 6A is a schematic view showing an example of other arrangements of head units arranged in a head base; and FIG. 6B is a schematic view showing an example of other arrangements of head units arranged in a head base.
FIG. 7 is a schematic view showing a shaping stage including some aspects of the invention.
FIG. 8 is a flowchart showing a three-dimensional shaped article production method according to an embodiment of the invention.
FIG. 9 is a schematic view showing a shaping stage including some aspects of the invention.
FIG. 10 is a schematic view showing a shaping stage according to an embodiment of the invention.

### DESCRIPTION OF EXEMPLARY EMBODIMENTS

Hereinafter, embodiments according to the invention will be described with reference to the accompanying drawings.

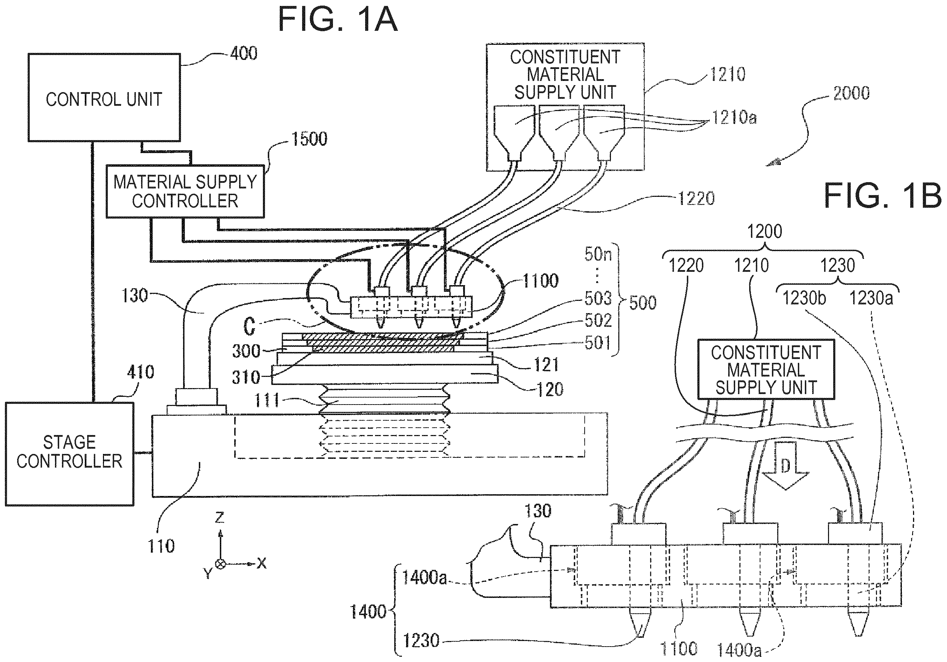

FIGS. 1A to 2B are schematic configuration views showing a configuration of a three-dimensional shaped article production apparatus according to an embodiment of the invention.

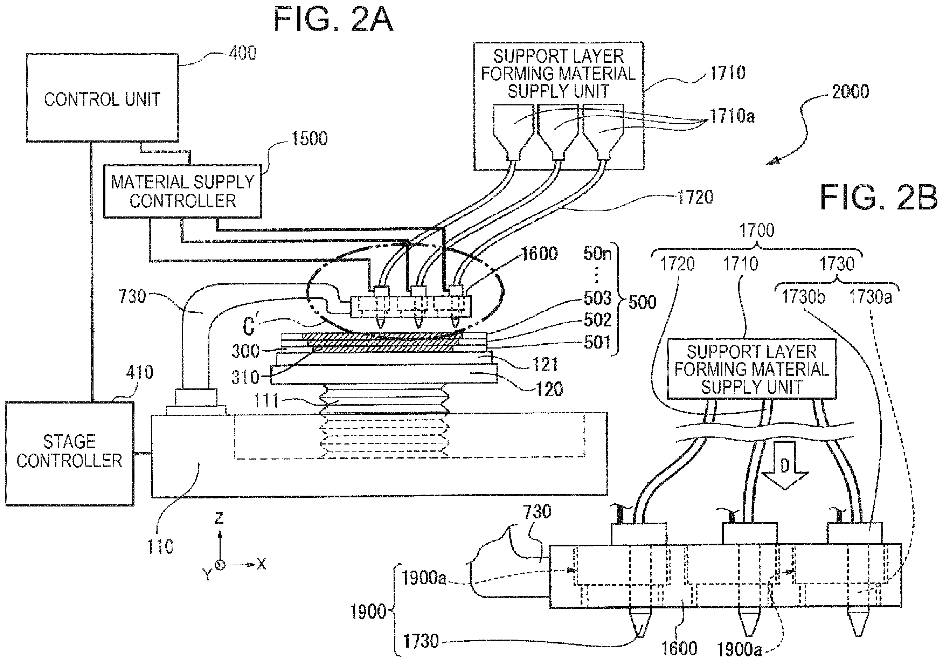

Here, the three-dimensional shaped article production apparatus according to this embodiment includes two types of material supply sections (head bases). Among these, FIGS. 1A and 1B are views showing one material supply section (a material supply section which supplies a constituent material (a material containing a powder constituting a three-dimensional shaped article, a solvent, and a binder)). FIGS. 2A and 2B are views showing another material supply section (a material supply section which supplies a support layer forming material for forming a support layer that supports a three-dimensional shaped article when the three-dimensional shaped article is formed).

The "three-dimensional shaping" as used herein refers to the formation of a so-called "three-dimensional shaped article", and also includes, for example, the formation of a shape with a thickness even if the shape is a plate shape or a so-called two-dimensional shape. Further, the "supporting" as used herein includes supporting from the lower side, and in addition thereto, also includes supporting from the lateral side, and in some cases, supporting from the upper side.

Further, the three-dimensional shaped article production apparatus according to this embodiment is configured to be able to form a support layer for supporting a constituent layer of a three-dimensional shaped article when the constituent layer is formed using a constituent material of the three-dimensional shaped article. Therefore, the apparatus is configured to be able to form a convex portion (so-called "overhang portion") protruding in a direction intersecting the stacking direction without deforming the portion. However, the configuration is not limited thereto, and a configuration in which the support layer is not formed (that is, a configuration in which the support layer forming material is not used) may be adopted.

A three-dimensional shaped article production apparatus 2000 (hereinafter referred to as "forming apparatus 2000") shown in FIGS. 1A to 2B includes a base 110 and a stage 120 which is provided movably in the X, Y, and Z directions shown in the drawings or drivably in the direction of rotation about the Z axis by a drive device 111 as a drive unit provided for the base 110.

Then, as shown in FIGS. 1A and 1B, the forming apparatus 2000 includes a head base support section 130, one end of which is fixed to the base 110, and to the other end of which, a head base 1100 that holds a plurality of head units 1400 each including a constituent material ejection section 1230 that ejects a constituent material is held and fixed.

Further, as shown in FIGS. 2A and 2B, the forming apparatus 2000 includes a head base support section 730, one end of which is fixed to the base 110, and to the other end of which, a head base 1600 that holds a plurality of head units 1900 each including a support layer forming material ejection section 1730 that ejects a material for forming a support layer that supports a three-dimensional shaped article is held and fixed.

Here, the head base 1100 and the head base 1600 are provided in parallel in the XY plane.

The constituent material ejection section 1230 and the support layer forming material ejection section 1730 have the same configuration. However, the configuration is not limited thereto.

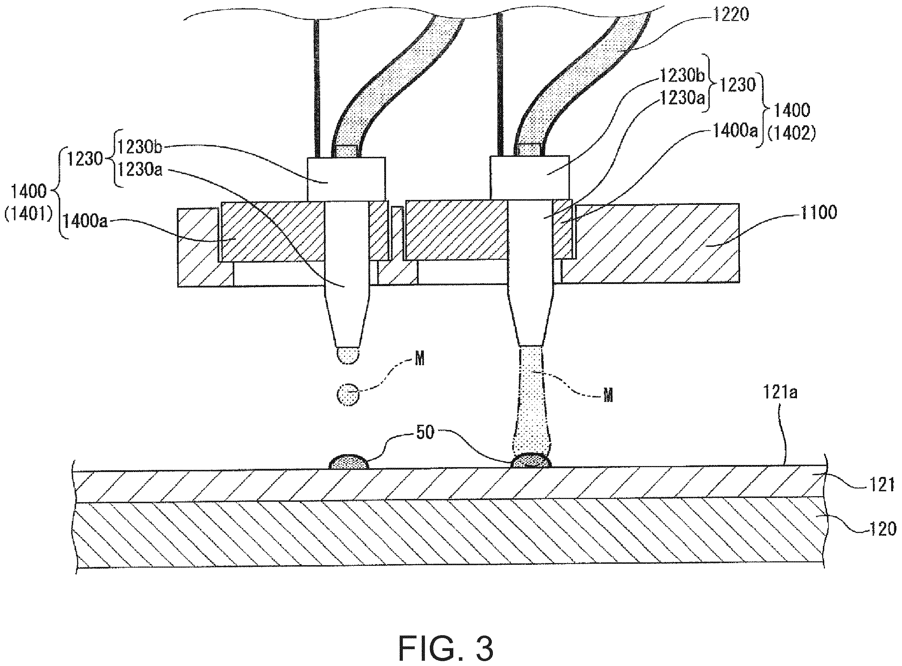

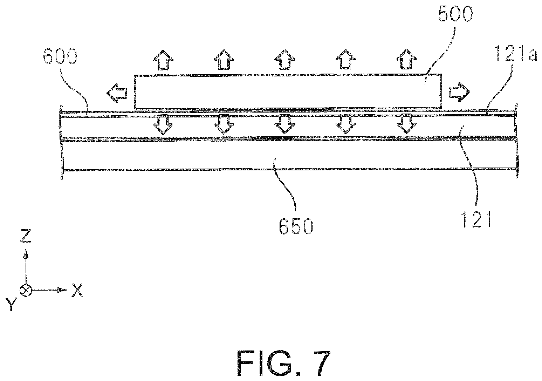

On the stage 120, an attachable and detachable shaping stage 121 is placed, and layers 501, 502, and 503 are formed in the process for forming a stacked body 500 of a three-dimensional shaped article on a forming surface 121a (see FIG. 3) of the shaping stage 121. The stacked body 500 of the three-dimensional shaped article formed on the forming surface 121a of the shaping stage 121 is degreased (at least a part of a solvent or a binder contained in the constituent material is decomposed and removed) or sintered by applying energy such as thermal energy after forming the stacked body in the forming apparatus 2000. Then, the degreasing or sintering of the stacked body 500 of the three-dimensional shaped article is performed by placing the stacked body 500 along with the shaping stage 121 in a thermostatic bath 650 (see FIG. 7) or the like capable of applying thermal energy as an energy application device which is provided separately from the forming apparatus 2000. Due to this, the shaping stage 121 is required to have high heat resistance. Therefore, by using, for example, a ceramic plate as the shaping stage 121, high heat resistance can be obtained, and also the reactivity thereof with the constituent material of the three-dimensional shaped article, which is further sintered (or which may be melted) is low, and alteration of the stacked body 500 of the three-dimensional shaped article can be prevented. Incidentally, in FIGS. 1A and 2A, for the sake of convenience of explanation, three layers: the layers 501, 502, and 503 are shown as examples, however, the layers (up to the layer 50n in FIGS. 1A and 2A) are stacked until the desired shape of the stacked body 500 of the three-dimensional shaped article is obtained.

Here, the layers 501, 502, 503, ..., and 50n are each constituted by a support layer 300 formed from the support layer forming material ejected from the support layer forming material ejection section 1730 and a constituent layer 310 formed from the constituent material ejected from the constituent material ejection section 1230.

FIG. 1B is an enlarged conceptual view of a portion C showing the head base 1100 shown in FIG. 1A. As shown in FIG. 1B, the head base 1100 holds a plurality of head units 1400. Although a detailed description will be given later, each head unit 1400 is configured such that the constituent material ejection section 1230 included in a constituent material supply device 1200 is held by a holding jig 1400a. The constituent material ejection section 1230 includes an ejection nozzle 1230a and an ejection drive section 1230b that allows the constituent material to be ejected from the ejection nozzle 1230a by a material supply controller 1500.

FIG. 2B is an enlarged conceptual view of a portion C' showing the head base 1600 shown in FIG. 2A. Here, the head base 1600 has the same configuration as that of the head base 1100. Specifically, as shown in FIG. 2B, the head base 1600 holds a plurality of head units 1900. Each head unit 1900 is configured such that the support layer forming material ejection section 1730 included in a support layer forming material supply device 1700 is held by a holding jig 1900a. The support layer forming material ejection section 1730 includes an ejection nozzle 1730a and an ejection drive section 1730b that allows the support layer forming material to be ejected from the ejection nozzle 1730a by the material supply controller 1500.

Although not included in the forming apparatus 2000 according to this embodiment, an energy application section capable of degreasing or sintering the constituent material ejected from the constituent material ejection section 1230 or the support layer forming material ejected from the support layer forming material ejection section 1730 may be included. By including such an energy application section, the necessity to separately provide an energy application device can be eliminated. The configuration of the energy application section or the energy application device is not particularly limited, however, examples thereof include, in addition to the thermostatic bath 650 or the like capable of applying thermal energy, a laser irradiation device including a laser irradiation section and a galvanometer mirror which determines the position of laser light from the laser irradiation section, and an electromagnetic wave (infrared light, ultraviolet light, or the like) irradiation device.

As shown in FIGS. 1A and 1B, the constituent material ejection section 1230 is connected to a constituent material supply unit 1210 which houses a constituent material made to correspond to each head unit 1400 held by the head base 1100 through a supply tube 1220. Then, a given constituent material is supplied to the constituent material ejection section 1230 from the constituent material supply unit 1210. In the constituent material supply unit 1210, the constituent material of the stacked body 500 of the three-dimensional shaped article to be shaped by the forming apparatus 2000 according to this embodiment is housed in a constituent material housing section 1210a, and each individual constituent material housing section 1210a is connected to an individual constituent material ejection section 1230 through a supply tube 1220. In this manner, by including the individual constituent material housing sections 1210a, a plurality of different types of materials can be supplied from the head base 1100.

As shown in FIGS. 2A and 2B, the support layer forming material ejection section 1730 is connected to a support layer forming material supply unit 1710 which houses a support layer forming material made to correspond to each head unit 1900 held by the head base 1600 through a supply tube 1720. Then, a given support layer forming material is supplied to the support layer forming material ejection section 1730 from the support layer forming material supply unit 1710. In the support layer forming material supply unit 1710, the support layer forming material constituting a support layer when shaping the stacked body 500 of the three-dimensional shaped article is housed in a support layer forming material housing section 1710a, and each individual support layer forming material housing section 1710a is connected to an individual support layer forming material ejection section 1730 through a supply tube 1720. In this manner, by including the individual support layer forming material housing sections 1710a, a plurality of different types of support layer forming materials can be supplied from the head base 1600.

As the constituent material and the support layer forming material, for example, a simple substance powder of magnesium (Mg), iron (Fe), cobalt (Co), chromium (Cr), aluminum (Al), titanium (Ti), copper, (Cu), or nickel (Ni), or a mixed powder of an alloy containing at least one metal among these (a maraging steel, stainless steel, cobalt-chrome-molybdenum, a titanium alloy, a nickel alloy, an aluminum alloy, a cobalt alloy, or a cobalt-chromium alloy) or the like can be used by being formed into a mixed material or the like in the form of a slurry (or a paste) containing a solvent and a binder.

It is also possible to use general purpose engineering plastics such as polyamide, polyacetal, polycarbonate, modified polyphenylene ether, polybutylene terephthalate, and polyethylene terephthalate. In addition thereto, it is also possible to use engineering plastics such as polysulfone, polyethersulfone, polyphenylene sulfide, polyarylate, polyimide, polyamideimide, polyetherimide, and polyether ether ketone.

In this manner, the constituent material and the support layer forming material are not particularly limited, and a metal other than the above-mentioned metals, a ceramic, a resin, or the like can also be used. Further, silicon dioxide, titanium dioxide, aluminum oxide, zirconium oxide, or the like can also be preferably used.

Examples of the solvent include water; (poly)alkylene glycol monoalkyl ethers such as ethylene glycol monomethyl ether, ethylene glycol monoethyl ether, propylene glycol monomethyl ether, and propylene glycol monoethyl ether; acetate esters such as ethyl acetate, n-propyl acetate, iso-propyl acetate, n-butyl acetate, and iso-butyl acetate; aromatic hydrocarbons such as benzene, toluene, and xylene; ketones such as methyl ethyl ketone, acetone, methyl isobutyl ketone, ethyl n-butyl ketone, diisopropyl ketone, and acetyl acetone; alcohols such as ethanol, propanol, and butanol; tetra-alkyl ammonium acetates; sulfoxide-based solvents such as dimethyl sulfoxide and diethyl sulfoxide; pyridine-based solvents such as pyridine, γ-picoline, and 2,6-lutidine; and ionic liquids such as tetra-alkyl ammonium acetate (for example, tetra-butyl ammonium acetate, etc.), and one type or two or more types in combination selected from these can be used.

As the binder, for example, an acrylic resin, an epoxy resin, a silicone resin, a cellulosic resin, or another synthetic resin, or PLA (polylactic acid), PA (polyamide), PPS (polyphenylene sulfide), or another thermoplastic resin can be used. Further, a UV curable resin which is polymerized by irradiation with UV light may be used as the binder.

The forming apparatus 2000 includes a control unit 400 as a control device which controls the stage 120, the constituent material ejection section 1230 included in the constituent material supply device 1200, and the support layer forming material ejection section 1730 included in the support layer forming material supply device 1700 based on the data for shaping a three-dimensional shaped article to be output from a data output device such as, for example, a personal computer (not shown). The control unit 400 includes a control section (not shown) which controls the stage 120 and the constituent material ejection section 1230 so that these members are driven and operated in cooperation with each other, and also controls the stage 120 and the support layer forming material ejection section 1730 so that these members are driven and operated in cooperation with each other.

The stage 120 provided movably for the base 110 is controlled such that a signal for controlling the start and stop of movement, the direction of movement, the amount of movement, the speed of movement, or the like of the stage 120 is generated in a stage controller 410 based on a control signal from the control unit 400 and sent to the drive device 111 provided for the base 110, and the stage 120 moves in the X, Y, or Z direction shown in the drawing. In the constituent material ejection section 1230 included in the head unit 1400, a signal for controlling the amount of the material ejected from the ejection nozzle 1230a by the ejection drive section 1230b included in the constituent material ejection section 1230 or the like is generated in the material supply controller 1500 based on a control signal from the control unit 400, and a predetermined amount of the constituent material is ejected from the ejection nozzle 1230a based on the generated signal.

In the same manner, in the support layer forming material ejection section 1730 included in the head unit 1900, a signal for controlling the amount of the material ejected from the ejection nozzle 1730a by the ejection drive section 1730b included in the support layer forming material ejection section 1730 or the like is generated in the material supply controller 1500 based on a control signal from the control unit 400, and a predetermined amount of the support layer forming material is ejected from the ejection nozzle 1730a based on the generated signal.

Next, the head unit 1400 will be described in further detail. The head unit 1900 has the same configuration as that of the head unit 1400, and therefore, a description of the detailed configuration of the head unit 1900 will be omitted.

FIGS. 3 to 4C show one example of the holding form of a plurality of head units 1400 and the constituent material ejection sections 1230 held by the head base 1100, and among these, FIGS. 4A to 4C are external views of the head base 1100 viewed from the direction of the arrow D shown in FIG. 1B.

As shown in FIG. 3, a plurality of head units 1400 are held by the head base 1100 through a fixing unit (not shown). Further, as shown in FIGS. 4A to 4C, in the head base 1100 of the forming apparatus 2000 according to this embodiment, the head units 1400 are included such that the following 4 units: a head unit 1401 in the first row from the lower side in the drawing, a head unit 1402 in the second row, a head unit 1403 in the third row, and a head unit 1404 in the fourth row are arranged in a staggered manner (alternately). Then, as shown in FIG. 4A, while moving the stage 120 in the X direction with respect to the head base 1100, the constituent material is ejected from each head unit 1400, whereby constituent layer constituting parts 50 (constituent layer constituting parts 50a, 50b, 50c, and 50d) are formed. The procedure for forming the constituent layer constituting parts 50 will be described later.

Incidentally, although not shown in the drawing, the constituent material ejection sections 1230 included in the respective head units 1401 to 1404 are configured to be connected to the constituent material supply unit 1210 through the ejection drive sections 1230b with the supply tubes 1220.

As shown in FIG. 3, the constituent material ejection section 1230 ejects a material M which is the constituent material of the three-dimensional shaped article from the ejection nozzle 1230a to the forming surface 121a of the shaping stage 121 placed on the stage 120. In the head unit 1401, an ejection form in which the material M is ejected in the form of a liquid droplet is illustrated, and in the head unit 1402, an ejection form in which the material M is supplied in the form of a continuous body is illustrated. The ejection form of the material M may be in the form of either a liquid droplet or a continuous body, however, in this embodiment, a description will be given by showing a configuration in which the material M is ejected in the form of a liquid droplet.

Incidentally, the constituent material ejection section 1230 and the support layer forming material ejection section 1730 are not limited to such a configuration, and may be a material supply section employing a different system such as an extruder.

The material M ejected in the form of a liquid droplet from the ejection nozzle 1230a flies substantially in the direction of gravity and lands on the shaping stage 121. The stage 120 moves, and by the material M landing on the shaping stage 121, the constituent layer constituting parts 50 are formed. An assembly of the constituent layer constituting parts 50 is formed as the constituent layer 310 (see FIG. 1A) of the stacked body 500 of the three-dimensional shaped article to be formed on the forming surface 121a of the shaping stage 121.

Next, the procedure for forming the constituent layer constituting parts 50 will be described with reference to FIGS. 4A to 5B.

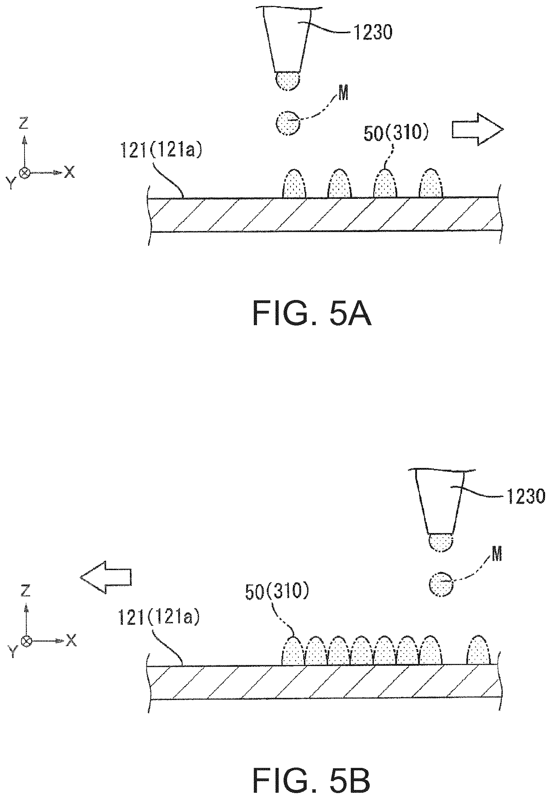

FIGS. 4A to 4C are plan views conceptually illustrating the relationship between the arrangement of the head units 1400 of this embodiment and the forming form of the constituent layer constituting parts 50. FIGS. 5A and 5B are side views conceptually illustrating the forming form of the constituent layer constituting parts 50.

First, when the stage 120 moves in the +X direction, the material M is ejected in the form of a liquid droplet from the plurality of ejection nozzles 1230a, and the material M is placed at predetermined positions on the forming surface 121a of the shaping stage 121, and therefore, the constituent layer constituting parts 50 are formed.

More specifically, first, as shown in FIG. 5A, while moving the stage 120 in the +X direction, the material M is placed at predetermined positions at regular intervals on the forming surface 121a of the shaping stage 121 from the plurality of ejection nozzles 1230a.

Subsequently, as shown in FIG. 5B, while moving the stage 120 in the -X direction shown in FIG. 1A, the material M is newly placed so as to fill the gap between the materials M placed at regular intervals.

However, a configuration in which while moving the stage 120 in the +X direction, the material M is ejected from the plurality of ejection nozzles 1230a at predetermined positions on the shaping stage 121 so that the materials M overlap with each other (so as not to form a gap) (not a configuration in which the constituent layer constituting parts 50 are formed by the reciprocation of the stage 120 in the X direction, but a configuration in which the constituent layer constituting parts 50 are formed by only one way movement of the stage 120 in the X direction) may be adopted.

By forming the constituent layer constituting parts 50 as described above, the constituent layer constituting parts 50 (the constituent layer constituting parts 50a, 50b, 50c, and 50d) (of the first line in the Y direction) for one line in the X direction of the respective head units 1401, 1402, 1403, and 1404 as shown in FIG. 4A are formed.

Subsequently, in order to form constituent layer constituting parts 50' (constituent layer constituting parts 50a', 50b', 50c', and 50d') of the second line in the Y direction of the respective head units 1401, 1402, 1403, and 1404, the head base 1100 is moved in the -Y direction. As for the amount of movement, when the pitch between the nozzles is represented by P, the head base 1100 is moved in the -Y direction by a distance of PIn (n represents a natural number). In this embodiment, a description will be given by assuming that n is 3.

By performing the same operation as described above as shown in FIGS. 5A and 5B, the constituent layer constituting parts 50' (constituent layer constituting parts 50a', 50b', 50c', and 50d') of the second line in the Y direction as shown in FIG. 4B are formed.

Subsequently, in order to form constituent layer constituting parts 50" (constituent layer constituting parts 50a", 50b", 50c", and 50d") of the third line in the Y direction of the respective head units 1401, 1402, 1403, and 1404, the head base 1100 is moved in the - Y direction. As for the amount of movement, the head base 1100 is moved in the -Y direction by a distance of P/3.

Then, by performing the same operation as described above as shown in FIGS. 5A and 5B, the constituent layer constituting parts 50" (constituent layer constituting parts 50a", 50b", 50c", and 50d") of the third line in the Y direction as shown in FIG. 4C are formed, and thus, the constituent layer 310 can be obtained.

Further, as for the material M ejected from the constituent material ejection section 1230, from any one unit or two or more units of the head units 1401, 1402, 1403, and 1404, a constituent material different from the other head units can also be ejected and supplied. Therefore, by using the forming apparatus 2000 according to this embodiment, a three-dimensional shaped article formed from different materials can be obtained.

Incidentally, in the layer 501 as the first layer, before, during or after forming the constituent layer 310 as described above, by ejecting the support layer forming material from the support layer forming material ejection section 1730, the support layer 300 can be formed in the same manner as described above. Then, also when the layers 502, 503, ..., and 50n are formed by being stacked on the layer 501, the constituent layer 310 and the support layer 300 can be formed in the same manner as described above.

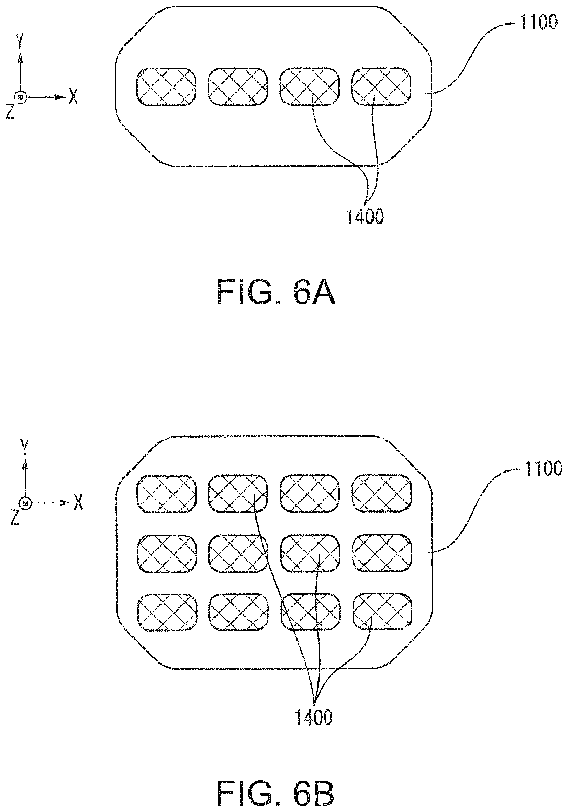

The number and arrangement of the head units 1400 and 1900 included in the forming apparatus 2000 according to this embodiment described above are not limited to the above-mentioned number and arrangement. FIGS. 6A and 6B schematically show examples of other arrangement of the head units 1400 placed in the head base 1100.

FIG. 6A shows a form in which a plurality of head units 1400 are arranged in parallel in the X-axis direction in the head base 1100. FIG. 6B shows a form in which the head units 1400 are arranged in a lattice pattern in the head base 1100. The number of head units to be arranged is not limited to the examples shown in FIGS. 6A and 6B in either case.

Next, the shaping stage 121 which is a principal part of the forming apparatus 2000 according to this embodiment described above will be described in further detail.

FIG. 7 is a schematic view showing the shaping stage 121 of this embodiment. More specifically, a state where the shaping stage 121 on which the stacked body 500 of the three-dimensional shaped article is formed is placed in the thermostatic bath 650 as the energy application device and subjected to degreasing is shown.

The shaping stage 121 of this embodiment is used in the forming apparatus 2000 for producing the three-dimensional shaped article by stacking layers to form the stacked body 500 of the three-dimensional shaped article as described above, and has the forming surface 121a on which the stacked body 500 of the three-dimensional shaped article is formed as shown in FIG. 7.

The shaping stage 121 is formed into a porous structure using a high-melting point material having a higher melting point than the constituent material of the three-dimensional shaped article. Therefore, the shaping stage 121 of this embodiment is configured such that when the stacked body 500 of the three-dimensional shaped article formed by stacking layers on the shaping stage 121 is degreased or sintered, the difference between a manner of volatilization of a material to be removed (such as a solvent or a binder contained in the constituent material) from the shaping stage 121 side (downward direction) and a manner of volatilization of the material to be removed from on the shaping stage 121 (upward direction and lateral direction) (that is, the difference in the shrinkage ratio) can be decreased. Accordingly, the shaping stage 121 is configured such that deformation of the stacked body 500 of the three-dimensional shaped article formed by stacking layers on the shaping stage 121 accompanying degreasing or sintering of the stacked body 500 of the three-dimensional shaped article can be suppressed.

The arrows in FIG. 7 conceptually show the direction in which the material to be removed is volatilized. In the case where the shaping stage 121 is not formed into a porous structure, volatilization of the material to be removed from the shaping stage 121 side (the downward arrows) hardly occurs, and a portion on the shaping stage 121 side is less shrunk than the other portions.

Further, the shaping stage 121 of this embodiment is attachable to and detachable from the forming apparatus 2000, and an organic film 600 having a lower melting point than the constituent material is formed on the forming surface 121a. Therefore, the shaping stage 121 is configured such that, for example, the organic film 600 can be removed along with the material to be removed accompanying degreasing or sintering of the stacked body 500 of the three-dimensional shaped article at a temperature which is lower than the melting point of the constituent material of the three-dimensional shaped article and higher than the melting point of the organic film 600, and thus, deformation of the stacked body 500 of the three-dimensional shaped article can be particularly effectively suppressed, and also the stacked body 500 of the three-dimensional shaped article after degreasing or sintering can be easily separated from the shaping stage 121. This is because the stacked body 500 of the three-dimensional shaped article is shrunk when it is degreased or sintered, however, by forming the organic film 600, it is possible to suppress shrinkage of the stacked body 500 of the three-dimensional shaped article by degreasing or sintering while confining the constituent material to the rough forming surface 121a. In particular, in the case where the shaping stage 121 is formed into a porous structure as in this embodiment, the roughness of the forming surface 121a tends to increase, and therefore, the effect of formation of the organic film 600 is particularly large.

Moreover, by configuring the shaping stage 121 to be attachable to and detachable from the forming apparatus 2000, when the stacked body 500 of the three-dimensional shaped article is transferred to the energy application device (thermostatic bath 650) for performing degreasing or sintering, the stacked body 500 can be transferred along with the shaping stage 121. Therefore, it is possible to suppress breakage of the stacked body 500 of the three-dimensional shaped article accompanying detachment of the stacked body 500 of the three-dimensional shaped article from the shaping stage 121 for placing the stacked body in the thermostatic bath 650.

It goes without saying that the shaping stage 121 in which the organic film 600 is formed in advance is prepared, and the stacked body 500 of the three-dimensional shaped article may be formed on the shaping stage 121. However, the shaping stage 121 in which the organic film 600 is not formed in advance may be prepared, and prior to the formation of the stacked body 500 of the three-dimensional shaped article, the support layer forming material may be ejected from the support layer forming material ejection section 1730, thereby forming the organic film 600 on the forming surface 121a, and thereafter, the stacked body 500 of the three-dimensional shaped article may be formed. It goes without saying that the shaping stage 121 in which the organic film 600 is formed on the forming surface 121a in this manner is also included in the invention.

Further, the "organic film having a lower melting point than the constituent material" refers to a film which covers at least a part of the forming surface 121a and may contain an organic component having a lower melting point than the constituent material.

Here, the organic film 600 formed in the shaping stage 121 of this embodiment contains an acrylic resin. The acrylic resin has a low melting point, and carbon derived from the acrylic resin hardly remains on the shaping stage 121 after degreasing or sintering, and therefore, mixing of carbon as an impurity in the stacked body 500 of the three-dimensional shaped article after degreasing or sintering can be suppressed.

However, the forming component of the organic film 600 is not particularly limited, and a polyester resin or the like can be used other than the acrylic resin, and also a plurality of types of resins may be contained.

Further, the organic film 600 may contain a component having a higher melting point than the constituent material. This is because by including a component having a higher melting point than the constituent material in the organic film 600, when the stacked body 500 of the three-dimensional shaped article formed on the shaping stage 121 is degreased or sintered, the component having a high melting point uniformly remains on the shaping stage 121 as a release material after degreasing or sintering, and therefore, the stacked body 500 of the three-dimensional shaped article can be separated from the shaping stage 121 particularly easily (in a short time).

The "component having a higher melting point than the constituent material" is not particularly limited, however, for example, a ceramic (alumina, silicon carbide, zirconia, or the like) can be used.

Further, the high-melting point material in the shaping stage 121 contains at least one of alumina, silicon carbide, and zirconia. This is because these materials have a high melting point and are hardly deformed even at a high temperature, and therefore, it is possible to particularly effectively suppress deformation of the stacked body 500 of the three-dimensional shaped article formed on the shaping stage 121 accompanying degreasing or sintering of the stacked body 500 of the three-dimensional shaped article.

In this manner, the forming apparatus 2000 of this embodiment is an apparatus for producing a three-dimensional shaped article by forming the stacked body 500 of the three-dimensional shaped article on the forming surface 121a of the shaping stage 121 as described above. Then, according to such a configuration, when the stacked body 500 of the three-dimensional shaped article formed by stacking layers on the shaping stage 121 is degreased or sintered, the difference between a manner of volatilization of the material to be removed from the shaping stage 121 side and a manner of volatilization of the material to be removed from on the shaping stage 121 can be decreased. Therefore, the forming apparatus 2000 of this embodiment is configured to be able to suppress deformation of the stacked body 500 of the three-dimensional shaped article formed by stacking layers on the shaping stage 121 accompanying degreasing or sintering of the stacked body 500 of the three-dimensional shaped article.

Further, the forming apparatus 2000 of this embodiment is configured such that the organic film 600 having a lower melting point than the constituent material of the three-dimensional shaped article is formed on the forming surface 121a of the shaping stage 121 which is attachable to and detachable from the apparatus, and therefore, the organic film 600 can be removed along with the material to be removed accompanying degreasing or sintering of the stacked body 500 of the three-dimensional shaped article, and thus, the stacked body 500 of the three-dimensional shaped article can be easily separated from the shaping stage 121.

Next, one example of the three-dimensional shaped article production method to be performed using the above-mentioned forming apparatus 2000 will be described with reference to a flowchart.

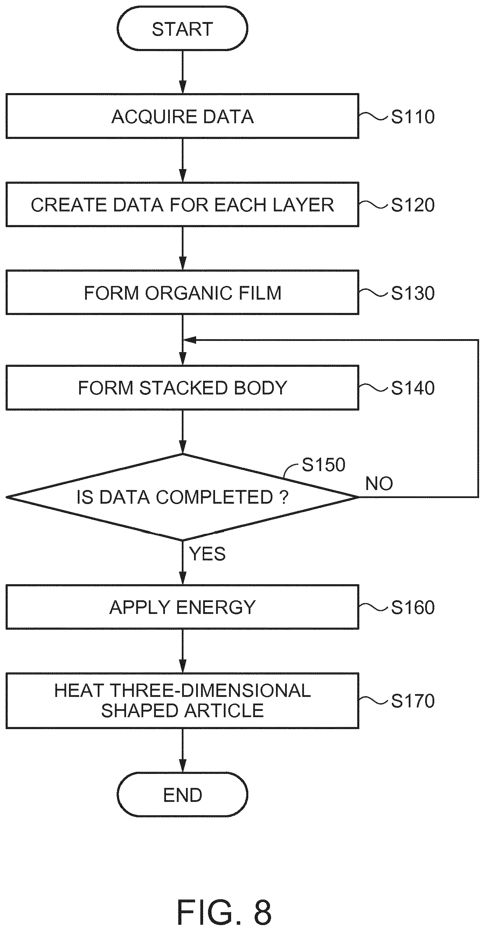

Here, FIG. 8 is a flowchart of the three-dimensional shaped article production method according to this embodiment.

As shown in FIG. 8, in the three-dimensional shaped article production method according to this embodiment, first, in Step S110, the data of the three-dimensional shaped article is acquired. More specifically, the data representing the shape of the three-dimensional shaped article is acquired from, for example, an application program or the like executed by a personal computer.

Subsequently, in Step S120, data for each layer are created. More specifically, the data representing the shape of the three-dimensional shaped article is sliced according to the shaping resolution in the Z direction, and bitmap data (cross-sectional data) are created for each cross section.

Subsequently, in the case where the shaping stage 121 in which the organic film 600 is not formed is prepared, in Step S130, the support layer forming material is ejected from the support layer forming material ejection section 1730, whereby the organic film 600 is formed on the forming surface 121a. However, in the case where the shaping stage 121 in which the organic film 600 is formed in advance is prepared, this step can be omitted. It will be apparent that the support layer forming material used here to form the organic film 600 need not be the same as the material used to act as the support layer during subsequent formation of the stacked body.

Subsequently, in Step S140, the stacked body 500 of the three-dimensional shaped article is formed based on the data for each layer created in Step S120. Then, Step S140 and Step S150 are repeated until the data for each layer is completed in Step S150, whereby the stacked body 500 of the three-dimensional shaped article is completed on the forming surface 121a of the shaping stage 121.

In Step S140 to Step S150, in the three-dimensional shaped article production method according to this embodiment, the stacked body 500 of the three-dimensional shaped article is formed (the constituent layer constituting parts 50 are fixed) by volatilizing the solvent naturally without particularly applying energy, however, the constituent layer constituting parts 50 may be fixed by applying energy such as heating.

Subsequently, in Step S160, the stacked body 500 of the three-dimensional shaped article is taken out from the forming apparatus 2000 along with the shaping stage 121, and placed in the thermostatic bath 650 as the energy application device, and then, energy is applied (heating is performed). The organic component of the organic film 600 is decomposed and removed in this step.

In the end, in Step S170, the output of energy in the thermostatic bath 650 is increased to heat the stacked body 500 of the three-dimensional shaped article, and the three-dimensional shaped article production method according to this embodiment is completed.

In the case where Step S160 is an energy application step corresponding to degreasing, Step S170 corresponds to a heating step corresponding to sintering or melting, and in the case where Step S160 is an energy application step corresponding to degreasing and sintering, Step S170 corresponds to a heating step corresponding to melting. Further, in the case where it is not necessary to perform sintering or melting, for example, in the case where the stacked body 500 of the three-dimensional shaped article is completed by degreasing or in the case where the stacked body 500 of the three-dimensional shaped article is completed by sintering, Step S170 can be omitted.

In this manner, the three-dimensional shaped article production method according to this embodiment includes a stacked body formation step (Step S140) of forming the stacked body 500 of the three-dimensional shaped article on the forming surface 121a using the shaping stage 121 described above and an energy application step (Step S160) of applying energy to the stacked body 500 of the three-dimensional shaped article.

Therefore, when the stacked body 500 of the three-dimensional shaped article formed by stacking layers on the shaping stage 121 (formed into a porous structure using a high-melting point material having a higher melting point than the constituent material) in the stacked body formation step is degreased or sintered in the energy application step, the difference between a manner of volatilization of the material to be removed from the shaping stage 121 side (downward direction) and a manner of volatilization of the material to be removed from the shaping side (upward direction and lateral direction) can be decreased. Accordingly, it is possible to suppress deformation of the stacked body 500 of the three-dimensional shaped article formed by stacking layers on the shaping stage 121 accompanying degreasing or sintering of the stacked body 500 of the three-dimensional shaped article.

Moreover, the organic film 600 can be removed along with the material to be removed in the energy application step accompanying degreasing or sintering of the stacked body 500 of the three-dimensional shaped article formed by stacking layers on the shaping stage 121 (on which the organic film 600 having a lower melting point than the constituent material is formed on the forming surface 121a) in the stacked body formation step, and therefore, the stacked body 500 of the three-dimensional shaped article can be easily separated from the shaping stage 121.

Further, in the three-dimensional shaped article production method according to this embodiment, an organic film formation step (Step S130) of forming the organic film 600 on the forming surface 121a can be performed before the stacked body formation step (Step S140). Therefore, the shaping stage 121 in which the organic film 600 is not formed in advance can be used.

Further, in the three-dimensional shaped article production method according to this embodiment, a heating step (Step S170) of sintering or melting the constituent material of the three-dimensional shaped article can be performed after the energy application step (Step S160). Therefore, the stacked body 500 of the three-dimensional shaped article degreased in the energy application step can be sintered or melted.

Incidentally, the shaping stage 121 of this embodiment is configured such that the organic film 600 having a lower melting point than the constituent material is formed on the forming surface 121a, however, the configuration is not limited thereto.

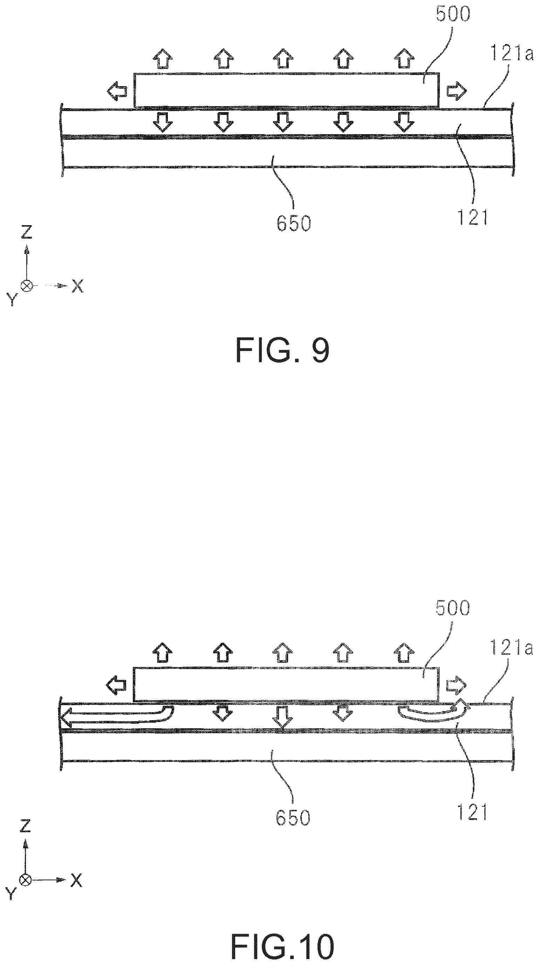

FIGS. 9 and 10 are schematic views showing the shaping stage 121 having a different configuration from the shaping stage 121 of the above embodiment, and are views corresponding to FIG. 7 in the shaping stage 121 of the above embodiment.

The shaping stage 121 shown in FIG. 7 is formed into a porous structure and is also configured such that when the stacked body 500 of the three-dimensional shaped article formed by stacking layers on the shaping stage 121 is degreased or sintered, the difference between a manner of volatilization of a material to be removed (such as a solvent or a binder contained in the constituent material) from the shaping stage 121 side (downward direction) and a manner of volatilization of the material to be removed from the shaping stage 121 (upward direction and lateral direction) (that is, the difference in the shrinkage ratio) can be decreased. This is based on the fact that a volatile component (a material to be removed) can move to pores due to the porous structure of the shaping stage 121 formed into a porous structure. Further, the pores are connected to each other, and for example, as shown by the arrows or the like in FIG. 7, in the case where communication is made from the forming surface 121a side (upper side) to a different side (lower side) from the forming surface 121a side, the difference between a manner of volatilization from the shaping stage 121 side (downward direction) and a manner of volatilization from on the shaping side (upward direction and lateral direction) can be particularly effectively decreased.

Here, the shaping stage 121 shown in FIG. 9 is also formed into a porous structure so as to communicate from the forming surface 121a side (upper side) to a different side (lower side) from the forming surface 121a side in the same manner as the shaping stage 121 shown in FIG. 7.

Here, on the shaping stage 121 shown in FIG. 9, the organic film 600 is not formed on the forming surface 121a unlike the shaping stage 121 shown in FIG. 7. In the case of such a configuration, when a porous structure is formed and the pores formed on the forming surface 121a have a large pore diameter, the stacked body of the three-dimensional shaped article is shrunk while inserting the constituent material of the three-dimensional shaped article into the pores and confining the constituent material therein during degreasing or sintering. Due to this, the stacked body of the three-dimensional shaped article may be deformed or the like accompanying degreasing or sintering.

However, in the shaping stage 121 shown in FIG. 9, pores of the porous structure are formed, and the average pore diameter of the pores formed on the forming surface 121a is set to 1 µm or more and 5 µm or less. The average pore diameter can be determined by, for example, mercury porosimetry or the like. By setting the average pore diameter to 1 µm or more, a solvent, a binder, or the like can be sufficiently volatilized from the lower side of the shaping stage 121. Further, by setting the average pore diameter to 5 µm or less, insertion of the constituent material of the three-dimensional shaped article into the pores can be suppressed, and it is possible to suppress (uneven) shrinkage of the stacked body of the three-dimensional shaped article while confining the constituent material of the three-dimensional shaped article in the pores during degreasing or sintering. That is, the shaping stage 121 shown in FIG. 9 is configured such that a solvent, a binder, or the like can be sufficiently volatilized from the lower side of the shaping stage 121, and also deformation or the like of the stacked body of the three-dimensional shaped article accompanying degreasing or sintering can be suppressed.

The determination on whether or not the porous structure is formed so as to communicate from the forming surface 121a side to a different side from the forming surface 121a side can be performed by, for example, dropping a liquid such as ethanol on the forming surface 121a and confirming whether or not the liquid soaks into the surface or the like on the opposite side to the forming surface 121a, and so on.

Further, the shaping stage 121 shown in FIG. 9 is configured to communicate from the upper side to the lower side in the same manner as the shaping stage 121 shown in FIG. 7, however, the shaping stage 121 shown in FIG. 10 is configured to communicate not only to the lower side from a region where the stacked body 500 is provided on the forming surface 121a side on the upper side, but also to a lateral side and to a region where the stacked body 500 is not provided on the forming surface 121a side.

As in the case of the shaping stage 121 shown in FIG. 10, a porous structure is formed so as to communicate from a region where the stacked body 500 is provided on the forming surface 121a side to a different side from the forming surface 121a side. Here, the "different side" refers to one, two or all of a lower side, a lateral side, and at least a portion of a region where the stacked body 500 is not provided on the forming surface 121a side when a portion where the stacked body 500 is provided on the forming surface 121a side is defined as the upper side.

In this manner, the shaping stage 121 is preferably configured to communicate from a region where the stacked body 500 is provided on the forming surface 121a side to at least one of a lower side, a lateral side, and a region where the stacked body 500 is not provided on the forming surface 121a side.

However, when the shaping stage 121 has a "porous structure", there are many pores therein and a volatile component can be made to escape into these many pores, and therefore, a configuration in which communication is not achieved (the pores forming the porous structure are not connected to one another from a region where the stacked body 500 is provided on the forming surface 121a side to a different side) may be adopted.

The invention is not limited to the above-mentioned embodiments, but can be realized in various configurations without departing from the scope of the invention as defined by the claims. For example, the technical features in the embodiments corresponding to the technical features in the respective forms described in "SUMMARY" may be appropriately replaced or combined in order to solve part or all of the problems described above or achieve part or all of the advantageous effects described above. Further, the technical features may be appropriately deleted unless they are described as essential features in the specification.

## Claims

1. A three-dimensional shaped article production apparatus (2000) for producing a three-dimensional shaped article by stacking layers (50) to form the stacked body (500),
the three-dimensional shaped article production apparatus comprising:
a three-dimensional shaped article shaping stage (121), wherein
the shaping stage has a forming surface (121a) on which the stacked body is to be formed, and
the shaping stage is formed into a porous structure using a high-melting point material having a higher melting point than a constituent material of the three-dimensional shaped article,
and **characterized in that**:
the shaping stage is configured to be attachable and detachable from the shaped article production apparatus, and suitable for placement in a thermostatic bath; and
pores of the porous structure are formed, and the pores formed on the forming surface have an average pore diameter of 1 µm or more and 5 µm or less; and
wherein the high-melting point material contains at least one of alumina, silicon carbide, and zirconia.

2. The three-dimensional shaped article production apparatus (2000) according to claim 1, wherein the porous structure allows communication from the forming surface side to a different side from the forming surface side.

3. The three-dimensional shaped article production apparatus (2000) according to claim 1 or claim 2, wherein an organic film (600) having a lower melting point than the constituent material is formed on the forming surface.

4. The three-dimensional shaped article production apparatus (2000) according to claim 3, wherein the organic film contains a component having a higher melting point than the constituent material.

5. The three-dimensional shaped article production apparatus (2000) according to claim 3 or claim 4, wherein the organic film contains an acrylic resin.

6. A three-dimensional shaped article production method, comprising:
(S140) forming a stacked body (500) on the forming surface (121a) of the shaping stage (121) according to any one of the preceding claims; and
applying energy to the stacked body.

7. The three-dimensional shaped article production method according to claim 6, wherein sintering or melting a constituent material is performed after the applying of the energy.

## Patentansprüche

1. Vorrichtung (2000) zum Herstellen eines dreidimensionalen Formteils zum Herstellen eines dreidimensionalen Formteils durch Stapeln von Schichten (50), um einen gestapelten Körper (500) zu bilden, wobei die Vorrichtung zum Herstellen eines dreidimensionalen Formteils umfasst:
eine Plattform (121) zum Formen eines dreidimensionalen Formteils, wobei
die Formgebungsplattform eine Formgebungsfläche (121a) aufweist, auf der der gestapelte Körper zu bilden ist, und
die Formgebungsplattform unter Verwendung eines Materials mit hohen Schmelzpunkt, das einen höheren Schmelzpunkt als ein Grundmaterial des dreidimensionalen Formteils aufweist, zu einer porösen Struktur gebildet wird,
und **dadurch gekennzeichnet, dass**:
die Formgebungsplattform ausgelegt ist, an der Vorrichtung zum Herstellen eines Formteils befestigt und von dieser gelöst zu werden, und zum Platzieren in einem thermostatischen Bad geeignet ist; und
Poren der porösen Struktur gebildet werden und die Poren, die an der Formgebungsfläche gebildet werden, einen durchschnittlichen Porendurchmesser von 1 µm oder mehr und 5 µm oder weniger aufweisen; und
wobei das Material mit hohem Schmelzpunkt mindestens eines von Aluminiumoxid, Siliziumcarbid und Zirkonoxid beinhaltet.

2. Vorrichtung (2000) zum Herstellen eines dreidimensionalen Formteils nach Anspruch 1, wobei die poröse Struktur Kommunikation von der Seite der Formgebungsfläche zu einer anderen Seite von der Seite der Formgebungsfläche ermöglicht.

3. Vorrichtung (2000) zum Herstellen eines dreidimensionalen Formteils nach Anspruch 1 oder Anspruch 2, wobei ein organischer Film (600) mit einem niedrigeren Schmelzpunkt als das Grundmaterial auf der Formgebungsfläche gebildet wird.

4. Vorrichtung (2000) zum Herstellen eines dreidimensionalen Formteils nach Anspruch 3, wobei der organische Film eine Komponente mit einem höheren Schmelzpunkt als das Grundmaterial beinhaltet.

5. Vorrichtung (2000) zum Herstellen eines dreidimensionalen Formteils nach Anspruch 3 oder Anspruch 4, wobei der organische Film ein Acrylharz beinhaltet.

6. Verfahren zum Herstellen eines dreidimensionalen Formteils, umfassend:
(S140) Bilden eines gestapelten Körpers (500) auf der Formgebungsfläche (121a) der Formgebungsplattform (121) nach einem der vorstehenden Ansprüche; und
Anwenden von Energie auf den gestapelten Körper.

7. Verfahren zum Herstellen eines dreidimensionalen Formteils nach Anspruch 6, wobei Sintern oder Schmelzen eines Grundmaterials nach Anwenden der Energie durchgeführt wird.

## Revendications

1. Appareil de production d'article tridimensionnels (2000) destiné à produire un article de forme tridimensionnelle par empilement de couches (50) de manière à former un corps empilé (500),
l'appareil de production d'article de forme tridimensionnelle comprenant :
un étage de façonnage d'article de forme tridimensionnelle (121), dans lequel
l'étage de façonnage comporte une surface de façonnage (121a) sur lequel le corps empilé doit être formé, et
l'étage de façonnage est formé en une structure poreuse à l'aide d'un matériau à point de fusion élevé présentant un point de fusion plus élevé qu'un matériau constitutif de l'article de forme tridimensionnelle,
et **caractérisé en ce que** :
l'étage de façonnage est configuré de manière à pouvoir être fixé à l'appareil de production d'article tridimensionnels et détaché de celui-ci, et adapté pour être placé dans un bain thermostatique ; et
des pores de la structure poreuse sont formés, et les pores formés sur la surface de façonnage présentent un diamètre de pore moyen de 1 µm ou supérieur à 5 µm ou moins ; et
dans lequel le matériau à point de fusion élevé contient l'un au moins parmi l'alumine, le carbure de silicium et le zircone.

2. Appareil de production d'article tridimensionnels (2000) selon la revendication 1, dans lequel la structure poreuse permet une communication du côté où se trouve la surface de façonnage vers un côté différent du côté où se trouve la surface de façonnage.

3. Appareil de production d'article tridimensionnels (2000) selon la revendication 1 ou la revendication 2, dans lequel un film organique (600) présentant un point de fusion plus bas que le matériau constitutif est formé sur la surface de façonnage.

4. Appareil de production d'article tridimensionnels (2000) selon la revendication 3, dans lequel le film organique contient un composant présentant un point de fusion plus élevé que le matériau constitutif.

5. Appareil de production d'article tridimensionnels (2000) selon la revendication 3 ou la revendication 4, dans lequel le film organique contient une résine acrylique.

6. Procédé de fabrication d'article de forme tridimensionnelle, comprenant :
(S140) la formation d'un corps empilé (500) sur la surface de façonnage (121a) de l'étage de façonnage (121) selon l'une quelconque des revendications précédentes ; et
l'application d'énergie au corps empilé.

7. Procédé de fabrication d'article de forme tridimensionnelle selon la revendication 6, dans lequel le frittage ou la fusion d'un matériau constitutif est réalisé(e) après l'application de l'énergie.
